# EUROPÄISCHE PATENTANMELDUNG

(11) **EP 1 897 720 A2**
(43) Veröffentlichungstag der Anmeldung: **12.03.2008**
(21) Anmeldenummer: 07015434.9
(22) Anmeldetag: 07.08.2007
(51) Int. Cl.: B60J 7/12

(54) **Verdeck für ein Cabriolet**

(30) Priorität: 08.09.2006 DE 102006042289
(71) Anmelder: Dr.Ing. h.c. F. Porsche Aktiengesellschaft, 70435 Stuttgart (DE)
(72) Erfinder: Hermann, Felix, 71229 Leonberg (DE); Beierl, Dominik, 70825 Korntal-Münchingen (DE); Schulz, Lars, 15566 Schöneiche (DE)

(57) **Zusammenfassung**

Die vorliegende Erfindung betrifft ein Verdeck (1) für ein Cabriolet, welches einen Heckscheibenrahmen (2) mit einer Heckscheibe (3) und im geschlossenem Zustand zumindest einen in Fahrtrichtung (4) davor gelegenen Dachabschnitt (5, 5', 5") aufweist. Erfindungswesentlich ist dabei, dass bei zwei, bei geschlossenem Verdeck (1) aneinander angrenzenden Dachabschnitten (5, 5', 5") an einem der Dachabschnitte (5, 5', 5") an dessen seitlichen Randbereichen jeweils ein nach hinten oder vorn verlängerter Fortsatz (6) ausgebildet ist, der als Dichtungsträger ausgebildet ist.

## Beschreibung

Die vorliegende Erfindung betrifft ein Verdeck für ein Cabriolet, welches in einem rückwärtigen Bereichs des Cabriolets ablegbar ist, gemäß dem Oberbegriff des Anspruchs 1.

Aus der EP 0 713 794 B1 ist ein Verdeck für ein Cabriolet bekannt, das in einem rückwärtigen Bereich des Cabriolets ablegbar ist und das einen Heckscheibenrahmen mit einer Heckscheibe und in geschlossenem Zustand zumindest einen in Fahrtrichtung davor gelegenen Dachabschnitt aufweist. Zusammengesetzt ist das Verdeck hauptsächlich aus einem Verdeckgestell und einem Verdeckbezug, wobei an seitlichen Rahmenteilen des Verdeckgestells der Verdeckbezug und Dichtleisten in Lage gehalten sind. Dabei sind die Anbindungen für den Verdeckbezug und die Dichtleisten getrennt voneinander an den seitlichen Rahmenteilen des Verdeckgestells vorgesehen, wobei ein dem Verdeckbezug zugekehrter nasenförmiger Teilbereich eines die Karosserieaußenhaut bildenden Wandabschnitts so ausgebildet ist, dass er zusammen mit dem angrenzenden, weiter innenliegenden Verdeckbezug eine Regenrinne bildet.

Nachteilig ist hierbei, dass eine Abdichtung zwischen dem Verdeckbezug und Seitenscheiben des Cabriolets konstruktiv aufwändig und dadurch teuer ist.

Die vorliegende Erfindung beschäftigt sich mit dem Problem, für ein Verdeck der gattungsgemäßen Art eine verbesserte Ausführungsform anzugeben, welche sich insbesondere durch ein verbessertes Dichtungskonzept zwischen dem Verdeck und der Seitenscheibe des Cabriolets auszeichnet.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Trennebene von, bei geschlossenem Verdeck aneinander anstoßenden Dachabschnitten des Verdecks versetzt zu einer Trennebene von, bei geschlossenem Verdeck aneinander anstoßenden Dichtabschnitten anzuordnen. Hierzu ist bei zwei, bei geschlossenem Verdeck aneinander angrenzenden Dachabschnitten an einem der beiden Dachabschnitten an dessen seitlichen Randbereichen jeweils ein nach hinten oder vorn verlängerter Fortsatz vorgesehen, welcher als Träger für eine bei geschlossenem Verdeck zwischen dem zugehörigen Dachabschnitt und einer Seitenscheibe gelegenen Dichtung ausgebildet ist. Durch den erfindungsgemäßen am jeweiligen Dachabschnitt angeordneten Fortsatz wird die Trennebene der seitlichen Dichtungen in Fahrtrichtung vor oder hinter die Trennebene der zugehörigen Dachabschnitte verlegt, wodurch insbesondere eine Problematik hinsichtlich der Anbindung eines Verdeckgestänges im Bereich der Trennebene der Dachabschnitte entschärft werden kann. Gerade im Stoßbereich zweier Dachabschnitte sind erfahrungsgemäß an jedem der beiden Dachabschnitte ein oder mehrere Komponenten des zugehörigen Verdeckgestänges mit den jeweiligen Dachabschnitten verbunden, wodurch dieser Bereich bereits konstruktiv aufwändig gestaltet ist. Müsste hier zusätzlich eine Trennung der Dichtungen realisiert werden, so würde dies weitere konstruktive Schwierigkeiten bereiten, weshalb der erfindungsgemäße Ansatz, nämlich die Trennebene der Dichtungen versetzt zu der Trennebene der Dachabschnitte anzuordnen, besonders einfallsreich ist, da hierdurch diese Problemzonen konstruktiv entschärft werden können.

Zweckmäßig ist der jeweilige Fortsatz als Spannelement für einen, das Verdeck zumindest teilweise überziehenden Überzug ausgebildet. Hierdurch kann der erfindungsgemäße Fortsatz zwei Aufgaben erfüllen. Zum einen trägt der jeweilige Fortsatz die zugehörige Dichtung und trennt diese abseits der bereits konstruktiv aufwändigen Trennebene zwischen den einzelnen Dachabschnitten, zum anderen kann der als Spannelement ausgebildete Fortsatz zugleich die Aufgabe der Darstellung und Formgebung einer Dachaußenkontur übernehmen, wodurch der erfindungsgemäße Fortsatz mehrere Funktionen erfüllen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein erfindungsgemäßes Verdeck in geschlossenem Zustand,
- Fig. 2: eine Darstellung wie in Fig. 1, jedoch in teilweise geöffnetem Zustand.

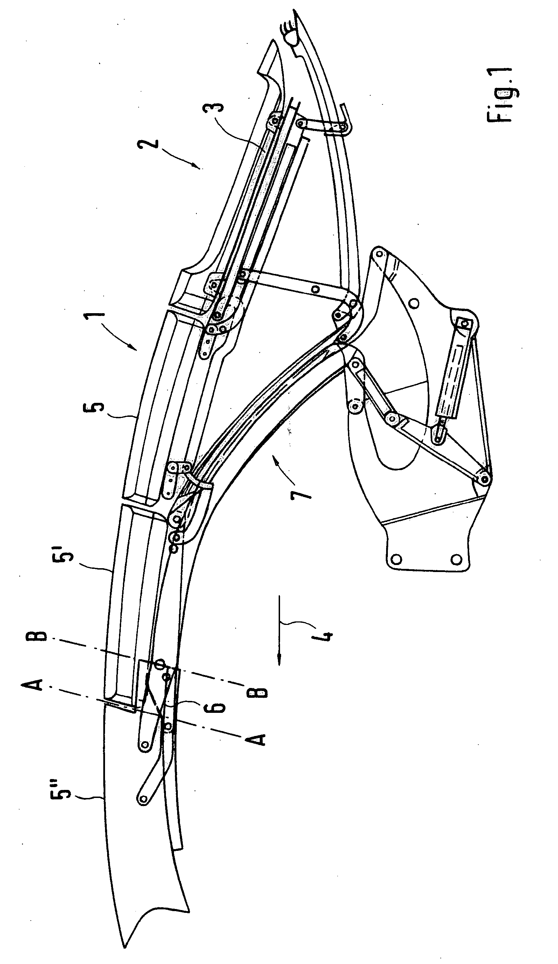

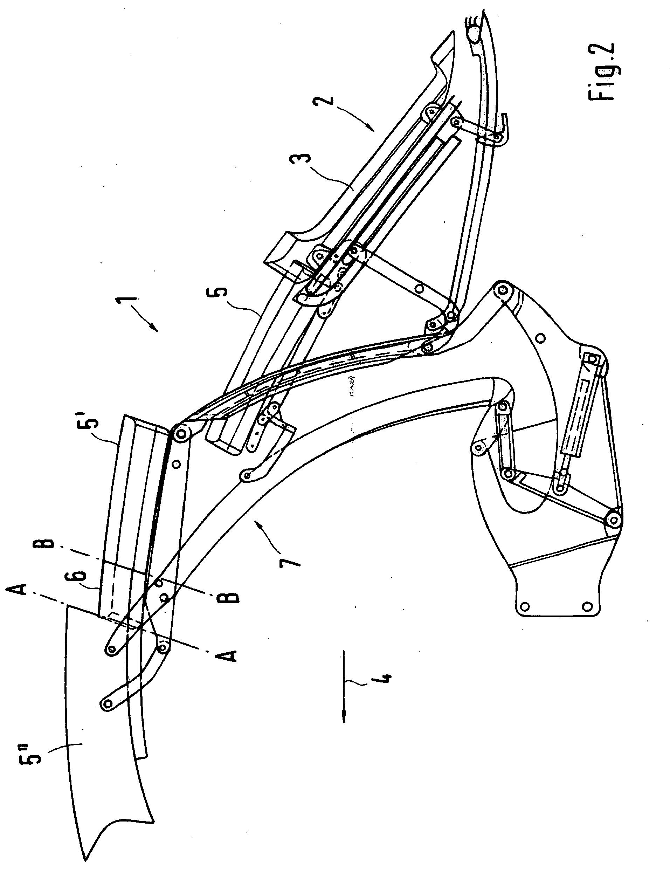

Entsprechend Fig. 1 ist ein zu öffnendes Verdeck 1 eines im übrigen nicht gezeigten Cabriolets dargestellt, welches in einem rückwärtigen Bereich des Cabriolets in üblicherweise, insbesondere in einem nicht gezeigten Verdeckkasten, ablegbar ist. Das Verdeck 1 weist in seinem rückwärtigen Bereich einen Heckscheibenrahmen 2 mit einer Heckscheibe 3 und gemäß den Darstellungen nach Fig. 1 und 2 zumindest einen in Fahrtrichtung 4 davor gelegenen Dachabschnitt 5 auf. Bei der in den Fig. 1 und 2 gezeigten Ausführungsvariante des erfindungsgemäßen Verdecks 1 sind in Fahrtrichtung 4 vor dem Heckscheibenrahmen 2 insgesamt drei Dachabschnitte 5, 5', 5" vorgesehen, wobei der in Fahrtrichtung 4 vorderste Dachabschnitt 5" als Integraldachrahmen 5" und der dahinter gelegene Dachabschnitt 5' als erster Flächenspriegel 5' ausgebildet sind.

Zwischen dem ersten Flächenspriegel 5' und dem Heckscheibenrahmen 2 ist ein zweiter Flächenspriegel 5 angeordnet, welcher bei einer Öffnungsbewegung des Verdecks 1 unter den Heckscheibenrahmen 2 verstellt wird, während der erste Flächenspriegel 5' und der Integraldachrahmen 5" über den Heckscheibenrahmen 2 verstellt werden. In abgelegtem Zustand bedeutet dies, dass der zweite Flächenspriegel 5 unterhalb und der erste Flächenspriegel 5' sowie der Integraldachrahmen 5" oberhalb des Heckscheibenrahmens im rückwärtigen Bereich des Cabriolets abgelegt sind.

Erfindungsgemäß ist nun zumindest bei zwei, bei geschlossenem Verdeck 1 aneinander angrenzenden Dachabschnitten 5", 5' an einem der beiden Dachabschnitte 5" an dessen seitlichen Randbereichen jeweils ein nach hinten oder vorn verlängerter Fortsatz 6 ausgebildet. Dieser Fortsatz 6 dient als Dichtungsträger für einen bei geschlossenem Verdeck 1 zwischen dem zugehörigen Dachabschnitt 5" und einer nicht gezeigten Seitenscheibe gelegenen Dichtung.

In Fig. 2 ist das erfindungsgemäße Verdeck 1 bei einer leicht geöffneten Stellung gezeigt, bei welcher der Integraldachrahmen 5" bereits beginnt, sich ebenso wie der ersten Flächenspriegel 5' über den zweiten Flächenspriegel 5 bzw. über den Heckscheibenrahmen 2 zu schieben. Der Fig. 2 ist dabei ebenso wie der Fig. 1 zu entnehmen, dass der vorderste Dachabschnitt 5", d.h. der Integraldachen 5", nach hinten abstehende Fortsätze 6 aufweist, welche an den dahinter gelegenen Dachabschnitt 5', d.h. an den ersten Flächenspriegel 5', seitlich angrenzen. Gezeichnet ist hierbei lediglich der perspektivisch sichtbare Dachfortsatz 6, während der auf einer gegenüberliegenden Seite des Verdecks 1 gelegene Dachfortsatz nicht dargestellt ist.

Der Fig. 2 ist weiter zu entnehmen, dass bei dem erfindungsgemäßen Verdeck 1 eine Trennebene A-A zwischen dem Integraldachrahmen 5" und dem ersten Flächenspriegel 5' nicht mit einer Dichtungstrennebene B-B zusammenfällt. Vielmehr ist die Trennebene B-B für die seitlich am Dachfortsatz angeordneten Dichtungen in Fahrtrichtung hinter der Trennebene A-A für die jeweils zugehörigen und benachbarten Dachabschnitte 5" und 5' vorgesehen. In der Trennebene A-A stoßen dabei bei geschlossenem Verdeck 1 die benachbart zur Trennebene A-A liegenden Dachabschnitte 5' und 5" aneinander, während in der Trennebene B-B die seitlichen Dichtungen in Fahrtrichtung 4 bei geschlossenem Verdeck 1 stirnseitig aneinander stoßen. Im Bereich der Trennebene A-A zwischen zwei benachbarten Dachabschnitten sind erfahrungsgemäß die Dachabschnitt ein seitlich gelegenes Verdeckgestänge 7 gelenkig angebunden, so dass dieser Bereich bereits konstruktiv stark beansprucht bzw. stark belegt ist. Deshalb schlägt die Erfindung vor, die Trennebene B-B für die seitlich verlaufenden Dichtungen zwischen den Dachabschnitten und den nicht dargestellten Seitenscheiben in Fahrtrichtung 4 vor oder hinter die Trennebene A-A für die Dachabschnitte zu verlegen, da dadurch die konstruktiv angespannte Situation im Bereich der Trennebene A-A entspannt werden kann.

Bei einer vorteilhaften Ausführungsform der erfindungsgemäßen Lösung ist der jeweilige Fortsatz 6 um eine Fahrzeuglängsachse gekrümmt und wird gleichzeitig zur Darstellung einer Dachaußenkontur des Verdecks 1 benutzt. Der seitliche Dachfortsatz 6 wirkt daher als Spannelement für einen das Verdeck 1 zumindest teilweise überziehenden Überzug 8. Der Fortsatz 6 kann somit zum einen die aufgrund der konstruktiven Gegebenheiten angespannte Situation bezüglich der Trennebene A-A entschärfen und zum anderen kann er gleichzeitig zur Gestaltung der Dachaußenkontur herangezogen werden. Von besonderem Vorteil ist dabei, dass der Fortsatz 6 eine steife und somit zuverlässige Anbindungsfläche für die Dichtungen darstellt, welche andererseits aufgrund dieser Tatsache eine verbesserte Dichtwirkung mit dem zugehörigen Seitenscheiben erzielen können.

Wie aus den Fig. 1 und 2 weiter ersichtlich ist, ist lediglich am Integraldachrahmen 5" ein in Fahrtrichtung 4 nach hinten verlängerter Fortsatz 6 angeordnet, während die zwischen dem Integraldachrahmen 5" und dem Heckscheibenrahm 2 liegenden Flächenspriegel 5, 5' keinen derartigen Dachfortsatz 6 aufweisen. Eine Dichtung zwischen den beiden Flächenspriegeln 5, 5' und einer zugehörigen Seitenscheibe erfolgt dabei in üblicherweise über einen Keder, welcher beispielsweise von einem Spannseil gespannt und von einem Einfassband eingefasst ist. Durch das Fehlen der Dachfortsätze 6 an den Flächenspriegeln 5, 5' sind diese in Fahrzeugquerrichtung schmäler ausgebildet als der Integraldachrahmen 5". Diese schmale Ausbildung bietet jedoch den Vorteil, dass der zweite Flächenspriegel 5 zwischen dem Verdeckgestänge 7 unter den Heckscheibenrahmen 2 beim Öffnen des Verdecks 1 verstellt werden kann. Gleichzeitig decken die Dachfortsätze 6 am Integraldachrahmen 5" bei abgelegtem Verdeck 1 das seitliche Verdeckgestänge 7 zumindest teilweise ab und übergreifen einen seitlichen Randbereich des ersten Flächenspriegels 5', wodurch dieser besonders platzsparende unterhalb des Integraldachrahmens 5" in seiner Ablagestellung abgelegt werden kann.

Um ein Ablaufen von Regenwasser bei geschlossenem Verdeck 1 in den Seitenscheibenbereich verhindern zu können, kann an zumindest einem Dachabschnitt 5, 5', 5" jeweils seitlich ein, einen Regenablauf bildendes, nicht gezeigtes Element angeordnet sein. Ein derartiger Regenablauf kann beispielsweise aus einem Kunststoffelement oder aus dem Verdeckstoff des Verdecks 1 gebildet werden.

Generell soll abschließend angemerkt werden, dass die Fig. 1 und 2 lediglich eine Ausführungsform des Verdecks 1 zeigen, bei welcher lediglich der Integraldachrahmen 5", also der vorderste Dachabschnitt 5", einen nach hinten verlängerten Fortsatz 6 aufweist. Von der Erfindung umschlossen sein sollen jedoch auch Ausführungsformen, bei welchen ein beliebiger Dachabschnitt 5, 5', 5" an dessen seitlichen Randbereichen jeweils ein in Fahrtrichtung 4 oder entgegensetzt der Fahrtrichtung 4 verlängerten Fortsatz 6 aufweist, der als Dichtungsträger für eine bei geschlossenem Verdeck 1 zwischen dem zugehörigen Dachabschnitt und einer Seitenscheibe gelegenen Dichtung ausgebildet ist.

## Patentansprüche

1. . Verdeck (1) für ein Cabriolet, das in einem rückwärtigen Bereich des Cabriolets ablegbar ist und das einen Heckscheibenrahmen (2) mit einer Heckscheibe (3) und in geschlossenem Zustand zumindest einem in Fahrtrichtung (4) davor gelegenen Dachabschnitt (5', 5", 5) aufweist, **dadurch gekennzeichnet, dass** bei zwei, bei geschlossenem Verdeck (1) aneinander angrenzenden Dachabschnitten (5', 5", 5) an einem der Dachabschnitte (5', 5", 5) an dessen seitlichen Randbereichen jeweils ein nach hinten oder vorn verlängerter Fortsatz (6) ausgebildet ist, der als Dichtungsträger für eine bei geschlossenem Verdeck (1) zwischen dem zugehörigen Dachabschnitt (5', 5", 5) und einer Seitenscheibe gelegenen Dichtung ausgebildet ist.

2. . Verdeck nach Anspruch 1, **dadurch gekennzeichnet, dass** das Verdeck (1) zumindest zwei Dachabschnitte (5, 5', 5") aufweist, wobei der in Fahrtrichtung (4) vordere Dachabschnitt (5", 5, 5') als Integraldachrahmen (5") und der oder die dahinter gelegenen Dachabschnitte (5, 5') als erster und zweiter Flächenspriegel (5, 5') ausgebildet sind.

3. . Verdeck nach Anspruch 1 oder 2, **dadurch gekennzeichnet, dass** der vorderste Dachabschnitt (5") nach hinten abstehende Fortsätze (6) aufweist.

4. . Verdeck nach einem der Ansprüche 1 bis 3, **dadurch gekennzeichnet, dass** eine Trennebene (A-A), in der, die den Fortsätzen (6) zugeordnete Dachabschnitte (5', 5") bei geschlossenem Verdeck (1) aneinander stoßen, in Fahrtrichtung (4) zu einer Trennebene (B-B), in welcher, den Fortsätzen (6) zugeordnete, bei geschlossenem Verdeck (1) in Fahrtrichtung (4) aneinander stoßende seitliche Dichtungen, versetzt angeordnet ist.

5. . Verdeck nach einem der Ansprüche 1 bis 4, **dadurch gekennzeichnet, dass** der jeweilige Fortsatz (6) um eine Fahrzeuglängsachse gekrümmt ist.

6. . Verdeck nach einem der Ansprüche 1 bis 5, **dadurch gekennzeichnet, dass** der jeweilige Fortsatz (6) als Spannelement für einen das Verdeck (1) zumindest teilweise überziehenden Überzug ausgebildet ist.

7. . Verdeck nach einem der Ansprüche 1 bis 6, **dadurch gekennzeichnet, dass** der jeweilige Fortsatz (6) eine seitliche Dachkontur des Verdecks (1) bildet.

8. . Verdeck nach einem der Ansprüche 1 bis 7, **dadurch gekennzeichnet, dass** an zumindest einem Dachabschnitt (5, 5', 5") jeweils seitlich ein, einen Regenablauf bildendes Element angeordnet ist.

9. . Verdeck nach einem der Ansprüche 1 bis 8, **dadurch gekennzeichnet, dass** der jeweilige Dachfortsatz (6) an den dahintergelegenen Dachabschnitt (5, 5', 5") seitlich angrenzt.
